# EUROPEAN PATENT SPECIFICATION

(11) **EP 0 980 487 B1**
(45) Date of publication and mention of the grant of the patent: **31.07.2002**
(21) Application number: 98917527.8
(22) Date of filing: 16.04.1998
(51) Int. Cl.: F16L 41/10

(54) **IMPROVED SEAL SYSTEM FOR A SERVICE TEE FOR GAS DISTRIBUTION**
ABDICHTUNG FÜR EINE ABZWEIGUNG AN EINER GASLEITUNG
SYSTEME DE JOINT AMELIORE POUR RACCORDEMENT EN T FILETE DESTINE A LA DISTRIBUTION DE GAZ

(30) Priority: 05.05.1997 US 45561 P
(43) Date of publication of application: 23.02.2000
(73) Proprietor: TDW DELAWARE, INC., Wilmington Delaware 19801 (US)
(72) Inventor: PACELLA, Francesco, B-6142 Leernes (BE)
(74) Representative: Denmark, James
(86) International application number: IB9800737
(87) International publication number: WO9850723

(56) References cited:
- DE-C- 922 265
- FR-A- 2 266 094
- FR-A- 2 703 130
- GB-A- 956 591
- GB-A- 1 201 467
- US-A- 2 566 502
- US-A- 3 069 187
- US-A- 3 498 644

## Description

### Background of the Invention

A common form of energy in use today is gas, particularly natural gas. Gas has advantages over other types of energy, such as coal, in that gas is clean burning and the use of gas under the right conditions does not result in atmospheric pollution. Further, gas is typically a cheaper source of energy than electricity and is particularly useful in heating residences.

Gas distribution systems typically employ relatively large diameter gas mains that branch into smaller diameter pipelines by which the gas is carried to users, such as homeowners. When it is necessary to branch off from a gas pipeline, the standard technique is to install a tee fitting in the pipeline. This requires that portions of the pipeline be connected to opposite ends of the tee fitting, a time consuming procedure when adding a tee fitting to an existing gas distribution pipe. For this reason a technique has been developed for installing a tee fitting in a gas distribution pipeline by first drilling a hole in the sidewall of the pipeline. The hole in the pipeline sidewall is then internally threaded and the threaded end of a tee fitting is threaded into the hole thereby providing a tee fitting that is substantially smaller and consequently less expensive than a tee fitting that fits in series with a pipeline. The technique of installing a tee fitting directly into a threaded opening in a pipeline can be carried out in such a way that it is not necessary to shut down the gas pipeline, that is, the steps of forming a hole in the sidewall of the pipeline, followed by threading of the opening and installation of a tee fitting can be carried out using equipment permitting all the steps to be accomplished without interfering with the flow of gas through the pipeline, and without gas escaping into the atmosphere.

When an opening is formed in the sidewall of a gas pipeline and the opening threaded to receive a threaded tee fitting therein, a significant problem is that of making sure that the installation of the tee fitting is leak proof, that is, that no leakage occurs between the interior of the pipeline and the environment at the area where the tee fitting is threaded into the pipeline sidewall. Others have attacked the problem of making sure that a tee fitting installed into the sidewall of a gas pipeline is leak proof, such as revealed by French Patent 2,703,130 dated August 25, 1995 and United States Patent 2,566,502 dated 4 September 1951.

In the French patent the seal system used to reduce the possibility of gas leakage includes a hollow saddle member having a tubular portion and an integral flange portion, the flange portion having an opening therethrough that is received on the exterior of the threaded bottom portion of a tee fitting. The integral tubular portion, after placement of the casing on a tee is then coaxial with an axis of the body of the tee fitting. Received within the hollow saddle is a short length tubular shaped elastomeric member (seal) having a lower edge that extends outwardly from the hollow saddle. Also received on the tee fitting is a nut that engages the hollow saddle.

The hollow saddle tubular sidewall has concave cutouts on opposed sides thereof that correspond to the curvature of the external surface of the gas pipeline to which the tee fitting is attached.

After an opening has been formed in a pipeline sidewall and the opening threaded, the lower threaded end of the tee fitting is threaded into the opening. After that the nut on the tee fitting is threadably advanced in the direction towards the pipe sidewall to force the hollow saddle that entraps the elastomeric seal downwardly so that the elastomeric seal engages the pipeline sidewall around the full perimeter of the opening.

In the system of this French patent it is necessary that the concave cutouts in the opposed sides of the hollow saddle be aligned with the pipeline, if not, the tee fitting will not be effectively sealed.

The system shown in French patent 2,703,130 has some desirable features but practical limitations that makes use of the tee fitting of this patent more difficult than is necessary. Putting it another way, the present invention provides a tee fitting for use on a gas pipeline as does French patent 2,703,130 but provides a tee fitting that is simpler, more convenient and more expeditiously attached to a pipeline and wherein portions of the elements making up the seal to prevent gas leakage do not have to be aligned with the pipeline.

Other examples of tee fittings having means to seal an opening formed in the sidewall of a pipeline are illustrated in the following:
Great Britain A-1 201 467
U.S. Patent 3,069,187
French Patent A-2 266 094

### Description of the Drawings

Figure 1 is an exploded elevational view, shown partially in cross-section of the elements making up the system of this invention for sealably attaching a tee fitting to a threaded opening in the sidewall of a gas pipeline.
Figure 2 is an elevational view, shown partially in cross-section, of the lower end portion of a tee fitting with the elements forming the sealing system of Figure 1 shown positioned on the tee fitting as the tee fitting is in condition to be threaded into a threaded opening in a pipeline sidewall.
Figure 3 is an elevational cross-sectional view of a typical tee fitting secured to a pipeline, illustrating how the system of this invention achieves a leak proof seal. In Figure 3 the components making up the sealing system are shown in their fully installed positions, that is, in the positions at which they will remain after the installation of the tee fitting.

### Detailed Description of the Preferred Embodiments

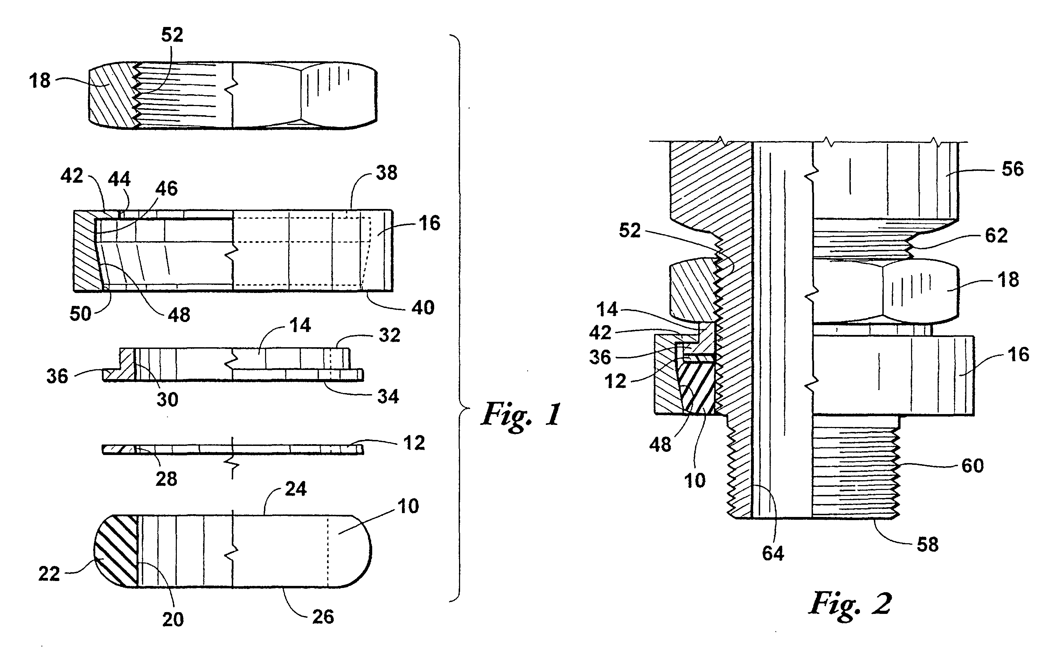

Referring first to Figure 1, the five basic components that make up the sealing system for a tee fitting that is designed to be installed in a threaded opening in a pipeline sidewall are shown. The elements illustrated in Figure 1 include an elastomeric seal 10, a washer 12, a thrust bushing 14, a casing 16 and a nut 18.

Elastomeric seal 10 is of a short length of tubular shape having an opening 20 therethrough and an arcuate exterior surface 22 that extends from a top end 24 to a bottom end 26. Thus, the elastomeric seal 10 could be generally described as of "coughnut shape" except that the opening 20 is preferably cylindrical to be slidably received on the threaded end portion of a tee fitting.

Washer I2 has an opening 28 therethrough so that it is slidably received on a tee fitting. Washer 12 may preferably be made of Teflon although a metal washer could suffice.

Thrust bushing 14 is a short length tubular member having an opening 32 therethrough extending between a top end 32 and a bottom end 34. Thrust bushing 14 has an integral increased external diameter flange portion 36 at the bottom end 34. Thrust bushing 14 is of metal, brass being a preferred but not mandatory material.

Casing 16 is also generally tubular in configuration having a top end 38 and a bottom end 40. An integral internally extending flange portion 42 is positioned at top end 38, the flange portion having an opening 44 therein.

The internal surface of casing 16 between flange portion 42 and bottom end 40 is formed of three sections beginning with a cylindrical section 46 that is contiguous with flange portion 42. Adjacent cylindrical section 46 is an internally tapered or frusto-conical surface 48 that tapers in decreasing internal diameter from cylindrical surface 46 in the direction towards bottom end 40. At bottom end 40 is a smaller diameter, short length, cylindrical surface 50 that is coaxial with the first cylindrical surface 46 but of decreased internal diameter. The function of surfaces 46, 48 and 50 serve to guide and help shape elastomeric member 10 as the seal system is put in use after a tee fitting has been installed on a pipeline in a way to be described subsequently.

The final element of the combination of elements shown in Figure 1 is nut 18 that has an axial threaded opening 52 therein. Nut 18 is of metal and a preferred metal is brass. The external surface 54 of nut 18 is preferably hexagonal or octagonal to facilitate threading the nut to actuate the sealing system after a tee fitting having the components of Figure 1 has been threaded into a threaded opening in a pipeline sidewall.

Figure 2 shows the lower end portion 56 of a tee fitting having a bottom end 58. Adjacent bottom end 58 is a first externally threaded section 60 of a selected external diameter and adjacent it is a second threaded section 62 that has a larger external diameter. An axial passageway 64 extends through the tee fitting.

Figure 2 shows the sealing elements assembled onto the lower end portion of the tee fitting so that the tee fitting is ready to be threaded into a threaded opening in a pipeline sidewall.

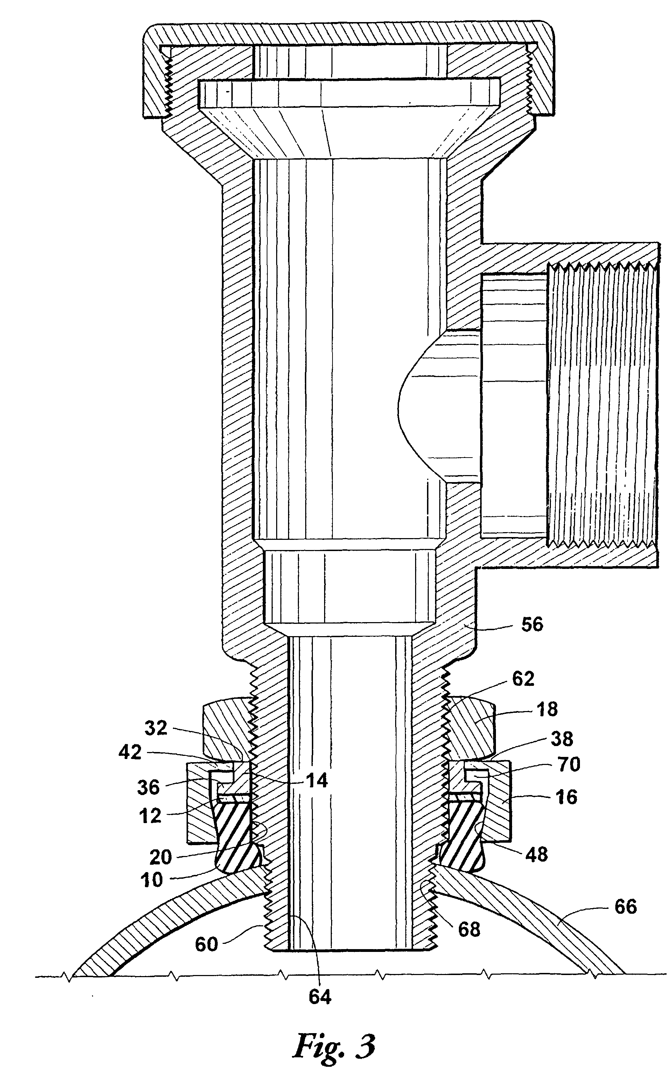

Figure 3 shows an elevational cross-sectional view of a typical tee fitting attached to a gas pipeline 66. Only the upper cross-sectional portion of pipeline 66 is illustrated. In the pipeline sidewall, a threaded opening 68 is shown.

Technology exists whereby a threaded opening 68 can be formed in gas pipeline 66 and a tee fitting attached to the pipeline while the pipeline is under pressure. One commercially available system for performing this work is known as the "MAB System", available from Electroma whose address is 11, rue de L'Atome, 67800 Bischheim, France.

After threaded opening 68 is formed in pipeline 66, the first threaded section 60 at the lower end portion of tee fitting 56 is threaded into the opening, the tee fitting being threadably advanced to the full depth of threads 60, that is, to the depth wherein the lower end of the second threaded section 62 meets against the exterior of pipe 66. With tee fitting 56 securely mounted to pipe 66, the next step is to employ the improved seal system to insure that leakage does not occur along the thread path between threaded opening 68 and the tee fitting threaded portion 60. This is accomplished by threadably downwardly advancing nut 18 towards pipe 66. As the nut is downwardly advanced, it first contacts the top end 32 of thrust bushing 14 and forces the thrust bushing downwardly against washer 12, downwardly displacing and compressing elastomeric seal 10. As thrust bushing 14 is forced downwardly a space 70 is formed between thrust bushing flange portion 36 and the integral flange portion 42 of casing 16. That is, the thrust bushing 14 advances downwardly with respect to casing 16, the thrust bushing functioning as a piston to downwardly displace and compress elastomeric seal 10 against the exterior surface of pipe 16 in the area surrounded threaded opening 68.

Further downward threaded advancement of nut 18 causes the nut to contact the top end surface 38 of casing 16 and force the casing downwardly towards the exterior surface of pipe 66 to further compress elastomeric seal 10.

With sufficient axial downwardly advancement of nut 16 the elastomeric seal is securely compressed against the exterior threaded surface 62 of the tee fitting and also against the complete circumferential exterior surface of pipe 66 surrounding threaded opening 68 to thereby insure a leak proof seal.

The interior frusto-conical surface 48 of casing 16 serves to force elastomeric seal 10 inwardly in the direction towards tee fitting threaded surface 62 to augment the sealing contact between the interior surface 20 of elastomeric seal 10 with the tee fitting exterior threaded surface 62.

Due to the synergistic relationship between the piston action of thrust bushing 14 and the tapered frusto-conical surface 48 of casing 16 a highly effective seal system for sealing a tee fitting is attained irrespective of the diameter of the exterior surface of pipe 16. That is, an effective seal is obtained with the system disclosed herein even though the gas pipeline 66 may have a relatively small diameter, such as 10.16 cm (4"). Further, the seal system of this invention employs components that are symmetrical, that is, that do not require, as an example, that the casing bottom end 40 have arcuate recesses therein to conform to the curvature of the exterior surface of pipe 66, thereby greatly simplifying the installation of the seal.

The claims and the specification describe the invention presented and the terms that are employed in the claims draw their meaning from the use of such terms in the specification. The same terms employed in the prior art may be broader in meaning than specifically employed herein. Whenever there is a question between the broader definition of such terms used in the prior art and the more specific use of the terms herein, the more specific meaning is meant.

## Claims

1. An improved system for providing communication with the interior of a pipe having a threaded opening in the pipe wall (66), comprising:
a tubular member (56) having at an end thereof external threads engageable with the pipe threaded opening;
a toroidal elastomeric seal (10) slidably positioned on said tubular member adjacent to said tubular member end;
a tubular thrust bushing (14) slidably positioned on said tubular member contiguous with said elastomeric seal;
a tubular casing (16) slidably positioned on said tubular member and extending telescopically over at least a portion of each of said elastomeric seal and said thrust bushing; and
a nut (18) threadably received on the tubular member and engageable with said thrust bushing and casing, the nut when threadably advanced towards the pipe wall serving to first displace said thrust bushing to force said elastomeric seal into sealing engagement with the pipe in the area thereof surrounding the threaded opening and subsequently to displace said casing towards said pipe wall, said casing serving to confine and direct said elastomeric seal against the exterior of said tubular member.

2. An improved system for providing communication with the interior of a pipe according to claim 1 wherein said tubular member external threads are first threads and wherein said tubular member has second threads of increased diameter adjacent said first threads, said elastomeric seal, thrust bushing and tubular casing being slidably positioned on the second threads and said nut being threadably received on the second threads.

3. An improved system for providing communication with the interior of a pipe according to claim 1 wherein said thrust bushing has a first end in the direction towards said elastomeric seal and includes, at the first end, an integral circumferential increased external diameter flange portion.

4. An improved system for providing communication with the interior of a pipe according to claim 1 including:
a washer slidably received on said tubular member between said thrust bushing and said elastomeric seal.

5. An improved system for providing communication with the interior of a pipe according to claim 1 wherein said casing has an internal circumferential surface configured to circumferentially squeeze said elastomeric seal as said casing is displaced in the direction of the pipe wall by threaded advancement of said nut.

6. An improved system for providing communication with the interior of a pipe according to claim 5 wherein said casing internal circumferential surface is defined in part by a frusto-conical surface that decreases in internal diameter in the direction towards the pipe.

7. An improved system for providing communication with the interior of a pipe according to claim 3 wherein said casing has, at an end thereof facing said nut, an integral inwardly radially extending flange portion that overlaps said thrust bushing increased external diameter flange portion to thereby retain said casing in a captured position relative to said thrust bushing and said elastomeric seal.

8. An improved system for providing communication with the interior of a pipe according to claim 1 wherein said thrust bushing and said elastomeric seal are positioned within said casing in the form of an assembly, said nut and the assembly being positioned on said tubular member before said tubular member is threadably engaged with a threaded opening in a pipe wall.

9. An improved system for providing communication with the interior of a pipe according to claim 8 wherein said elastomeric seal is substantially fully confined within said assembly.

10. An improved system for providing communication with the interior of a pipe according to claim 8 wherein said assembly includes a washer positioned between said thrust washer and said elastomeric seal within said casing.

## Patentansprüche

1. Verbessertes System zum Bereitstellen von Kommunikation mit dem Inneren eines Rohrs, das eine mit Gewinde versehene Öffnung in der Rohrwand (66) hat, das Folgendes umfasst:
ein röhrenförmiges Element (56), das an einem Ende von ihm ein mit der mit Gewinde versehenen Öffnung in Eingriff bringbares Außengewinde hat,
eine ringförmige elastomere Dichtung (10), die an das genannte Ende des röhrenförmigen Elements angrenzend verschiebbar auf dem genannten röhrenförmigen Element positioniert ist,
eine röhrenförmige Druckbuchse (14), die anstoßend an die genannte elastomere Dichtung verschiebbar auf dem genannten röhrenförmigen Element positioniert ist,
ein röhrenförmiges Gehäuse (16), das verschiebbar auf dem genannten röhrenförmigen Element positioniert ist und sich teleskopartig über wenigstens jeweils einen Teil der genannten elastomeren Dichtung und der genannten Druckbuchse erstreckt, und
eine Mutter (18), die gewindemäßig auf dem röhrenförmigen Element aufgenommen wird und mit der genannten Druckbuchse und dem genannten Gehäuse in Eingriff bringbar ist, wobei die Mutter, wenn sie gewindemäßig auf die Rohrwand zu voranbewegt wird, dazu dient, zunächst die genannte Druckbuchse zu verschieben, um die genannte elastomere Dichtung in dem die mit Gewinde versehene Öffnung umgebenden Bereich des Rohres in Dichtungseingriff mit dem Rohr zu bringen, und anschließend das genannte Gehäuse auf die genannte Rohrwand zu zu verschieben, wobei das genannte Gehäuse zum Eingrenzen und Richten der genannten elastomeren Dichtung gegen das Äußere des genannten röhrenförmigen Elements dient.

2. Verbessertes System zum Bereitstellen von Kommunikation mit dem Inneren eines Rohrs nach Anspruch 1, bei dem das genannte Außengewinde des röhrenförmigen Elements ein erstes Gewinde ist und bei dem das genannte röhrenförmige Element ein zweites Gewinde größeren Durchmessers hat, das an das genannte erste Gewinde angrenzt, wobei die genannte elastomere Dichtung, die genannte Druckbuchse und das genannte röhrenförmige Gehäuse verschiebbar auf dem zweiten Gewinde positioniert werden und die genannte Mutter gewindemäßig auf dem zweiten Gewinde aufgenommen wird.

3. Verbessertes System zum Bereitstellen von Kommunikation mit dem Inneren eines Rohrs nach Anspruch 1, bei dem die genannte Druckbuchse ein erstes Ende in der Richtung zur genannten elastomeren Dichtung hat und an dem ersten Ende einen integralen Umfangsflanschteil größeren Außendurchmessers hat.

4. Verbessertes System zum Bereitstellen von Kommunikation mit dem Inneren eines Rohrs nach Anspruch 1, das Folgendes hat:
eine verschiebbar auf dem genannten röhrenförmigen Element zwischen der genannten Druckbuchse und der genannten elastomeren Dichtung aufgenommene Dichtung.

5. Verbessertes System zum Bereitstellen von Kommunikation mit dem Inneren eines Rohrs nach Anspruch 1, bei dem das genannte Gehäuse eine innere Umfangsoberfläche hat, die gestaltet ist, um die genannte elastomere Dichtung beim Verschieben des genannten Gehäuses in der Richtung der Rohrwand durch das gewindemäßige Voranbewegen der genannten Mutter umfangsmäßig zu quetschen.

6. Verbessertes System zum Bereitstellen von Kommunikation mit dem Inneren eines Rohrs nach Anspruch 5, bei dem die genannte innere Umfangsoberfläche des Gehäuses teilweise von einer kegelstumpfförmigen Oberfläche definiert wird, deren Innendurchmesser in der Richtung zum Rohr abnimmt.

7. Verbessertes System zum Bereitstellen von Kommunikation mit dem Inneren eines Rohrs nach Anspruch 3, bei dem das genannte Gehäuse an einem der genannten Mutter zugewandten Ende von ihm einen integralen sich nach innen radial erstreckenden Flanschteil hat, der den genannten Druckbuchsenflanschteil größeren Außendurchmessers überlappt, um das Gehäuse dadurch in einer gefangenen Position relativ zur genannten Druckbuchse und der genannten elastomeren Dichtung festzuhalten.

8. Verbessertes System zum Bereitstellen von Kommunikation mit dem Inneren eines Rohrs nach Anspruch 1, bei dem die genannte Druckbuchse und die genannte elastomere Dichtung in der Form einer Baugruppe in dem genannten Gehäuse positioniert sind, wobei die genannte Mutter und die Baugruppe auf dem genannten röhrenförmigen Element positioniert werden, bevor das genannte röhrenförmige Element gewindemäßig mit einer mit Gewinde versehenen Öffnung in einer Rohrwand in Eingriff gebracht wird.

9. Verbessertes System zum Bereitstellen von Kommunikation mit dem Inneren eines Rohrs nach Anspruch 8, bei dem die genannte elastomere Dichtung weitgehend völlig in der genannten Baugruppe eingeschlossen ist.

10. Verbessertes System zum Bereitstellen von Kommunikation mit dem Inneren eines Rohrs nach Anspruch 8, bei dem die genannte Baugruppe eine zwischen der genannten Druckscheibe und der genannten elastomeren Dichtung in dem genannten Gehäuse positionierte Scheibe hat.

## Revendications

1. Système amélioré pour assurer la communication avec le milieu interne d'une conduite possédant un orifice fileté dans la paroi de la conduite (66), comprenant :
un élément tubulaire (56) qui possède à l'une des extrémités de celui-ci des filetages externes capables de s'engager dans l'ouverture filetée de la conduite ;
un joint élastomère toroïdal (10) positionné de façon coulissante sur ledit élément tubulaire adjacent à ladite extrémité de l'élément tubulaire ;
une bague de butée tubulaire (14) positionnée de façon coulissante sur ledit élément tubulaire contigu audit joint élastomère ;
un carter tubulaire (16) positionné de façon coulissante sur ledit élément tubulaire et s'étendant télescopiquement au-dessus d'une partie au moins de chacun dudit joint élastomère et de ladite bague de butée ; et
un écrou (18) reçu par vissage sur ledit élément tubulaire et capable de s'engager avec ladite bague de butée et ledit carter, lorsqu'il avance par vissage vers la paroi de la conduite, l'écrou sert d'abord à déplacer ladite bague de butée afin de forcer le joint élastomère à s'engager de façon étanche avec la conduite dans la zone de celui-ci autour de l'ouverture filetée et ensuite à déplacer ledit carter vers ladite paroi de la conduite, ledit carter servant à confiner et à diriger ledit joint élastomère contre la face externe dudit élément tubulaire.

2. Système amélioré pour assurer la communication avec le milieu interne d'une conduite, selon la revendication 1, dans lequel lesdits filetages externes de l'élément tubulaire sont les premiers filetages, et dans lequel l'élément tubulaire possède des deuxièmes filetages ayant un diamètre plus grand et qui sont adjacents aux premiers filetages, lesdits joint élastomère, bague de butée et carter tubulaire étant positionnés de façon coulissante sur les deuxièmes filetages et ledit écrou étant reçu par vissage sur les deuxièmes filetages.

3. Système amélioré pour assurer la communication avec le milieu interne d'une conduite, selon la revendication 1, dans lequel ladite bague de butée a une première extrémité qui est dirigée vers ledit joint élastomère et inclut, au niveau de la première extrémité, une partie à bride circonférentielle intégrée ayant un diamètre externe accru.

4. Système amélioré pour assurer la communication avec le milieu interne d'une conduite, selon la revendication 1, comprenant :
une rondelle qui est reçue de façon coulissante sur ledit élément tubulaire entre ladite bague de butée et ledit joint élastomère.

5. Système amélioré pour assurer la communication avec le milieu interne d'une conduite, selon la revendication 1, dans lequel ledit carter possède une surface circonférentielle interne qui est configurée pour serrer de façon circonférentielle ledit joint élastomère au fur et à mesure que ledit carter est déplacé dans la direction de la paroi de la conduite grâce à l'avance par vissage dudit écrou.

6. Système amélioré pour assurer la communication avec le milieu interne d'une conduite, selon la revendication 5, dans lequel ladite surface circonférentielle interne du carter est définie en partie par une surface conique tronquée dont le diamètre interne diminue dans la direction allant vers la conduite.

7. Système amélioré pour assurer la communication avec le milieu interne d'une conduite, selon la revendication 3, dans lequel ledit carter possède, sur l'une de ses extrémités faisant face audit écrou, une partie à bride intégrée s'étendant radialement vers l'intérieur laquelle chevauche ladite partie à bride à diamètre externe accru de la bague de butée, permettant ainsi de retenir ledit carter dans une position captive par rapport à ladite bague de butée et audit joint élastomère.

8. Système amélioré pour assurer la communication avec le milieu interne d'une conduite, selon la revendication 1, dans lequel ladite bague de butée et ledit joint élastomère sont positionnés dans ledit carter sous forme d'un ensemble, ledit écrou et l'ensemble étant positionnés sur ledit élément tubulaire avant que ledit élément tubulaire ne soit engagé par vissage dans l'ouverture filetée d'une paroi de conduite.

9. Système amélioré pour assurer la communication avec le milieu interne d'une conduite, selon la revendication 8, dans lequel le joint élastomère est sensiblement et entièrement confiné à l'intérieur dudit ensemble.

10. Système amélioré pour assurer la communication avec le milieu interne d'une conduite, selon la revendication 8, dans lequel ledit ensemble inclut une rondelle qui est positionnée entre ladite bague de butée et ledit joint élastomère à l'intérieur dudit carter.
